# DEMANDE DE BREVET EUROPEEN

(11) **EP 4 727 033 A1**
(43) Date de publication de la demande: **15.04.2026**
(21) Numéro de dépôt: 25208452.0
(22) Date de dépôt: 14.10.2025
(51) Int. Cl.: H04B 7/185, H04L 5/00

(54) **PROCÉDÉ DE TRANSMISSION DE SIGNAL PAR LIAISON RF PAR ACCÈS MULTIPLE NON ORTHOGONAL POUR TRANSMISSION DE SIGNAUX PAR SATELLITES**

(30) Priorité: 14.10.2024 FR 2411091
(71) Demandeur: THALES, 92190 Meudon (FR)
(72) Inventeur: BRETON, Etienne, 92622 GENNEVILLIERS CEDEX (FR); BLANDINIÈRES, David, 92622 GENNEVILLIERS CEDEX (FR); GOUIX, Martin, 92622 GENNEVILLIERS CEDEX (FR)
(74) Mandataire: Lavoix

(57) **Abrégé**

Procédé de transmission de signal NOMA par liaison RF pour transmission de signaux par satellites, dans un système de communication comprenant un émetteur (E), un satellite (SAT), et au moins deux récepteurs hétérogènes (R1, R2, R3), formant au moins deux ensembles de récepteurs, nommés ensemble favorisé et ensemble défavorisé dans lequel :
lorsque le rapport signal sur bruit (SNR) d'un récepteur (R1, R2, R3) du système de communication est supérieur à un premier seuil (S1) on affecte le récepteur (R1, R2, R3) à l'ensemble favorisé, et sinon on l'affecte à l'ensemble défavorisé et
on superpose à l'émission du signal par l'émetteur, durant un même temps symbole, un symbole primaire et un symbole secondaire, le symbole primaire étant destiné à l'ensemble favorisé et l'ensemble défavorisé, et le symbole secondaire étant à destination de l'ensemble favorisé et configuré pour être démodulable par l'ensemble favorisé, mais indémodulable par l'ensemble défavorisé.

## Description

La présente invention concerne un procédé de transmission de signal par liaison RF par accès multiple non orthogonal pour transmission de signaux par satellites.

Il est connu le document EP3672105 B1 qui divulgue un procédé d'accès multiple non orthogonal pour transmission satellites. Ce document divulgue que NOMA (acronyme anglais pour "Non Orthogonal Multiple Access", ou "accès multiple non orthogonal") est une technique d'accès réseau issue des normes 5G et utilisée dans le cadre de l'internet des objets, qui est décrite par exemple dans Anas Benjebbour, "An overview of Non-Orthogonal Multiple Access", du 6 Juin 2017. Ce document mentionne que la technique d'accès réseau NOMA vise à augmenter l'efficacité spectrale d'un réseau de communications terrestres en multiplexant des paires d'utilisateurs dans le plan des puissances. La bonne réception de chacun de ces signaux nécessite la mise en œuvre, du côté du récepteur, d'un algorithme de séparation des sources dit algorithme de SIC (acronyme anglais pour "Successive Interference Cancellation", ou suppression d'interférences successives). A ces fins, un planificateur de ressources (ou "scheduler" en langue anglaise) identifie des paires d'utilisateurs dont les transmissions peuvent être multiplexées en puissance, et assigne aux équipements constituant ces paires des niveaux de puissance d'émission suffisamment différents pour qu'un récepteur puisse séparer les signaux transmis par chacun des équipements. A la réception, un procédé de SIC est implémenté pour séparer les signaux.

Ce document divulgue un procédé de transmission de signal par liaison RF par accès multiple non orthogonal pour transmission de signaux par satellites ou NOMA d'une pluralité d'émetteurs vers un unique récepteur, dans lequel une superposition de symbole avec un delta de puissance est effectuée dans le canal de transmission.

Aussi, ce document ne permet pas de transmettre des signaux d'un émetteur vers plusieurs récepteurs par l'intermédiaire d'un satellite, en séparant les récepteurs en deux catégories de récepteurs.

Un but de l'invention est de pouvoir pallier les problèmes précédemment cités, et d'augmenter les débits pour tous les types de récepteurs.

Il est proposé, selon un aspect de l'invention, un procédé de transmission de signal par liaison RF par accès multiple non orthogonal pour transmission de signaux par satellites, dans un système de communication comprenant un émetteur, un satellite, et au moins deux récepteurs hétérogènes, formant au moins deux ensembles de récepteurs, nommés ensemble favorisé et ensemble défavorisé,
dans lequel lorsque le rapport signal sur bruit d'un récepteur du système de communication est supérieur à un premier seuil on affecte le récepteur à l'ensemble favorisé, et sinon on l'affecte à l'ensemble défavorisé ; et
dans lequel, on superpose à l'émission du signal par l'émetteur, durant un même temps symbole, un symbole primaire et un symbole secondaire, le symbole primaire étant destiné à l'ensemble favorisé et l'ensemble défavorisé, et le symbole secondaire étant à destination de l'ensemble favorisé et configuré pour être démodulable par l'ensemble favorisé, mais indémodulable par l'ensemble défavorisé.

Selon un mode de mise en œuvre, l'ensemble favorisé comprend des clés de chiffrages inconnues de l'ensemble défavorisé, permettant le déchiffrage du symbole secondaire, et l'ensemble défavorisé comprend des clés de chiffrages connues de l'ensemble favorisé, permettant le déchiffrage du symbole primaire.

Selon un mode de mise en œuvre, on superpose, en outre, durant le même temps symbole, un symbole tertiaire aux symboles primaire et secondaire, le symbole tertiaire étant à destination d'un ensemble très favorisé comprenant au moins un récepteur du système de communication et configuré pour être démodulable par l'ensemble très favorisé mais indémodulable par les ensembles favorisé et défavorisé,
dans lequel, lorsque le rapport signal sur bruit d'un récepteur du système de communication est supérieur à un deuxième seuil supérieur au premier seuil, on affecte le récepteur à l'ensemble très favorisé.

Dans un mode de mise en œuvre, l'ensemble très favorisé comprend des clés de chiffrages inconnues des ensembles favorisé et défavorisé, permettant le déchiffrage du symbole tertiaire, et comprenant les clés de chiffrage connues des ensembles favorisé et défavorisé.

Selon un mode de mise en œuvre, dans lequel les ensembles sont modifiables dynamiquement, en fonction de mesures de rapport signal sur bruit des récepteurs.

L'invention sera mieux comprise à l'étude de quelques modes de réalisation décrits à titre d'exemples nullement limitatifs et illustrés par les dessins annexés sur lesquels :
[Fig.1] illustre schématiquement le procédé de transmission de signal par liaison RF par accès multiple non orthogonal NOMA pour transmission de signaux par satellites, dans un système de communication, selon l'état de l'art ;
[Fig.2] illustre schématiquement la superposition, à l'émission, par l'émetteur, du signal, durant un même temps symbole, selon un aspect de l'invention ;
[Fig.3] illustre schématiquement le cas de la [Fig.2] pour une application TRANSEC, selon un aspect de l'invention ;
[Fig.4] illustre schématiquement un tableau des possibilités de modulations pour le symbole primaire SP et le symbole secondaire SS, selon un aspect de l'invention ;
[Fig.5] illustre schématiquement l'utilisation d'une troisième modulation pour réseau hétérogène à trois groupes (défavorisé, favorisé et très favorisé), selon un aspect de l'invention ;
[Fig.6] illustre schématiquement le cas de la [Fig.5] pour une application TRANSEC, selon un aspect de l'invention ; et
[Fig.7] illustre schématiquement l'utilisation d'un canal caché, selon un aspect de l'invention.

En comparaison des méthodes de l'état de l'art, la présente invention permet d'augmenter les débits pour tous les types de récepteurs en utilisant toute la trame temporelle pour tous les récepteurs.

La présente invention permet également de répondre aux besoin de canal caché. Le symbole secondaire SS peut être réalisé à destination de récepteurs non connu de l'ensemble du réseau.

Enfin cette solution est compatible avec les formes d'onde déjà existantes et permet de garder une interopérabilité. L'idée est de garder la forme d'onde existante avec le symbole primaire. On peut alors utiliser une forme d'onde par-dessus pour le symbole secondaire SS.

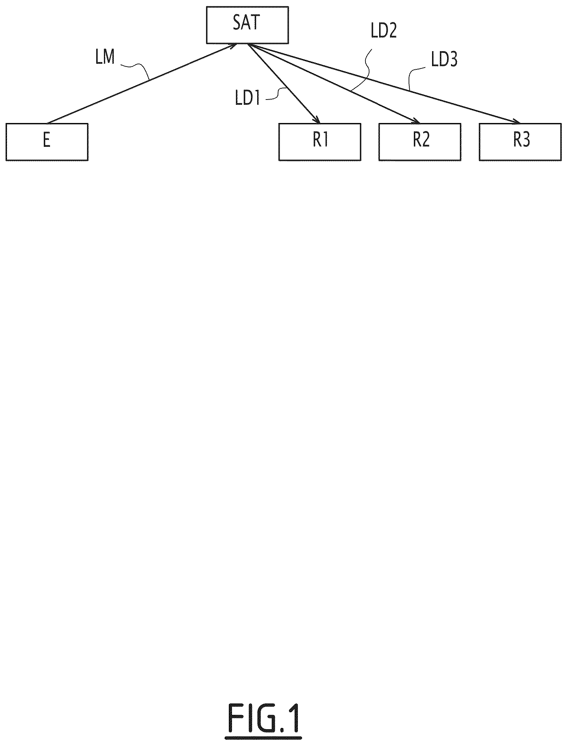

La [Fig.1] représente le procédé de transmission de signal par liaison RF par accès multiple non orthogonal NOMA pour transmission de signaux par satellites, dans un système de communication.

Le système de communication comprend un émetteur E transmettant par un lien montant LM des signaux à destination d'un satellite SAT, qui le diffuse et est reçu par, en l'espèce trois récepteurs, un premier récepteur R1, un deuxième récepteur R2 et un troisième récepteur R3, par trois liens descendants respectifs LD1, LD2 et LD3.

Sur l'exemple de la [Fig.1], le lien descendant L1 entre le satellite SAT et le premier récepteur R1 a un mauvais rapport signal sur bruit SNR, ou, en d'autres termes un rapport signal sur bruit SNR inférieur ou égal à un premier seuil S1, les deux liens descendants L2 et L3, entre le satellite SAT et respectivement le deuxième récepteur R2 et le troisième récepteur R3 ont un bon rapport signal sur bruit SNR, ou, en d'autres termes des rapports signal sur bruit SNR supérieurs au premier seuil S1.

Ainsi, la comparaison par rapport au premier seuil S1 du rapport signal sur bruit permet d'affecter un récepteur à un ensemble favorisé ou défavorisé. En l'espèce le premier récepteur R1 est défavorisé et les deux récepteurs R2 et R3 sont favorisés.

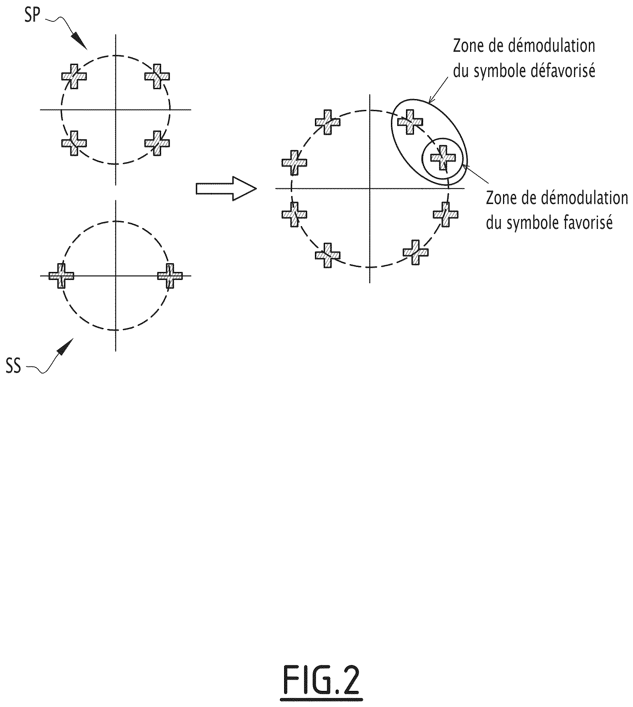

La [Fig.2] représente schématiquement la superposition, à l'émission, par l'émetteur, du signal, durant un même temps symbole, un symbole primaire SP un symbole secondaire SS, le symbole primaire SP étant destiné à l'ensemble favorisé et l'ensemble défavorisé, et le symbole secondaire SS étant à destination de l'ensemble favorisé et configuré pour être démodulable par l'ensemble favorisé, mais indémodulable par l'ensemble défavorisé.

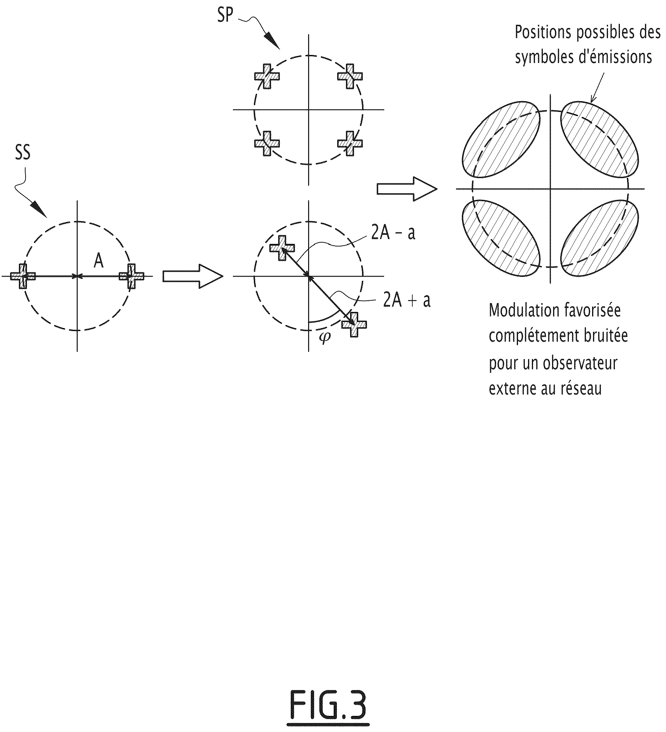

Comme représenté sur la [Fig.3] dans le cas d'une application TRANSEC, l'ensemble favorisé comprend des clés de chiffrages inconnues de l'ensemble défavorisé, permettant le déchiffrage du symbole secondaire SS, et l'ensemble défavorisé comprend des clés de chiffrages connues de l'ensemble favorisé, permettant le déchiffrage du symbole primaire SP.

La valeur A représente l'amplitude du symbole favorisé avant chiffrement via Transec, et la valeur a est calculée à partir de Pseudo Aléas fournis par une fonction de génération type AES. Cette valeur doit être comprise dans l'intervalle [0 ; A].

Les valeurs 2A+a et 2A-a représentent donc les distances à l'origine du symbole favorisé après chiffrement. La valeur φ est également générée via Pseudo Aléas dans un intervalle [0 ; 2π].

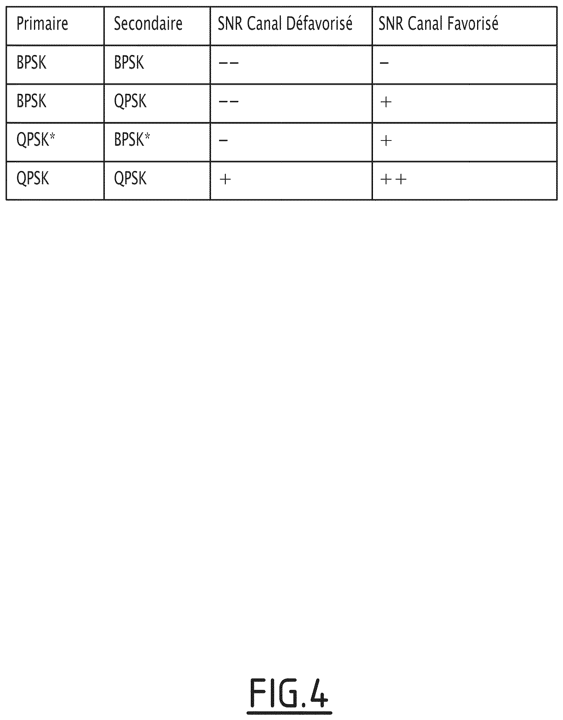

La [Fig.4] représente un tableau des possibilités de modulations pour le symbole primaire SP et le symbole secondaire SS en fonction du rapport SNR/CN0 des canaux de transmission, SNR étant le rapport signal sur bruit et CN0 représente le rapport signal sur bruit SNR normalisé en dB.

Dans ce tableau, l'idée est de montrer que :
- lorsque le SNR du canal défavorisée est très proche du bruit (par exemple à 0,3 dB au-dessus du bruit) et que le SNR du canal favorisé est très proche du SNR du canal défavorisé (par exemple 0.7dB au-dessus du canal défavorisé) une constellation BPSK/BPSK est à privilégier ;
- lorsque le SNR du canal défavorisée est très proche du bruit (par exemple à 0,3 dB au-dessus du bruit) et que le SNR du canal favorisé est relativement éloignée du SNR du canal défavorisé (par exemple 3dB au-dessus du canal défavorisé) une constellation BPSK/QPSK est à privilégier ;
- lorsque le SNR de canal est éloigné du bruit, (par exemple à 5 dB au-dessus du bruit) et que le SNR du canal favorisé est très proche du SNR du canal défavorisé (par exemple 0.7dB au-dessus du canal défavorisé) une constellation QPSK/BPSK est à privilégier ; et
- lorsque le SNR de canal est éloigné du bruit (par exemple à plus de 5 dB au-dessus du bruit) et que le SNR du canal favorisé est relativement éloignée du SNR du canal défavorisé (par exemple 3dB au-dessus du canal défavorisé) une constellation QPSK/QPSK est à privilégier.

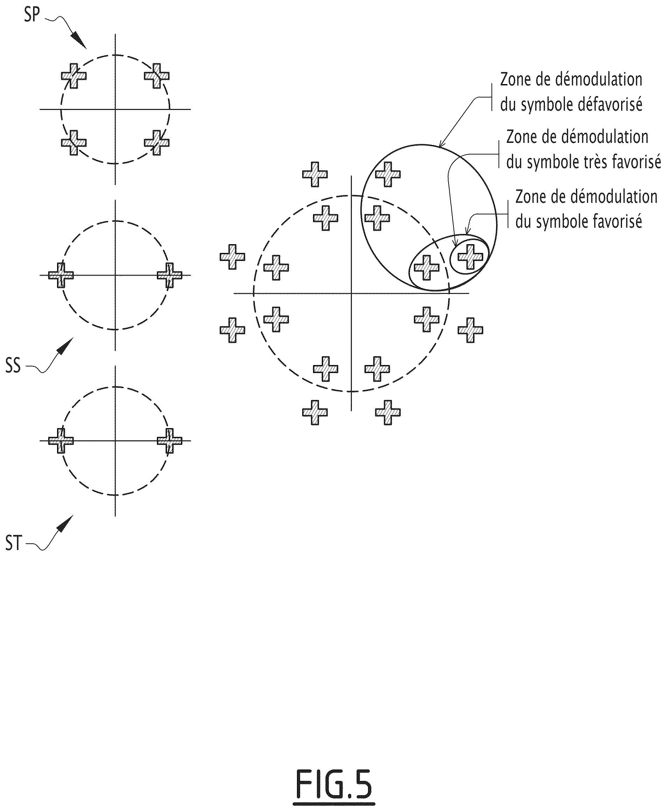

Sur la [Fig.5] est représenté schématiquement l'utilisation d'une troisième modulation pour réseau hétérogène à trois groupes (défavorisé, favorisé et très favorisé).

En d'autres termes, on superpose, en outre, durant le même temps symbole, un symbole tertiaire ST aux symboles primaire et secondaire, le symbole tertiaire ST étant à destination d'un ensemble très favorisé comprenant au moins un récepteur du système de communication, et configuré pour être démodulable par l'ensemble très favorisé, mais indémodulable par les ensembles favorisé et défavorisé. Lorsque le rapport signal sur bruit d'un récepteur du système de communication est supérieur à un deuxième seuil S2 supérieur au premier seuil S1, on affecte le récepteur à l'ensemble très favorisé.

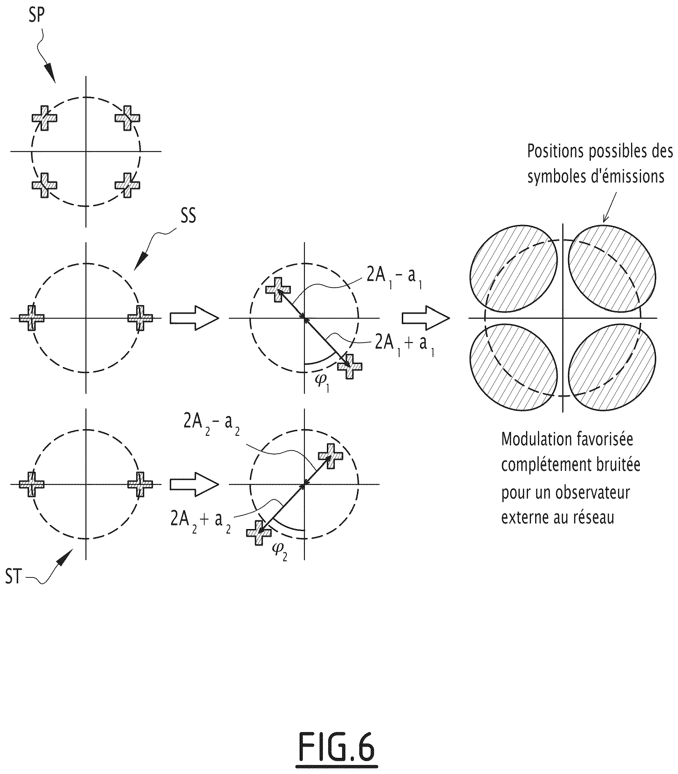

Comme représenté sur la [Fig.6] dans le cas d'une application TRANSEC, l'ensemble très favorisé comprend des clés de chiffrages inconnues de l'ensemble défavorisé et de l'ensemble favorisé, permettant le déchiffrage du symbole tertiaire ST. L'ensemble très favorisé et l'ensemble favorisé comprennent des clés de chiffrages inconnues de l'ensemble défavorisé, permettant le déchiffrage du symbole secondaire SS. L'ensemble très favorisé, l'ensemble favorisé et l'ensemble défavorisé comprennent des clés de chiffrages permettant le déchiffrage du symbole primaire SP. Il s'agit du même concept que pour la [Fig.3], mais avec un étage supplémentaire : les indices 1 concernent le symbole favorisé, et les indices 2 concernent le symbole très favorisé.

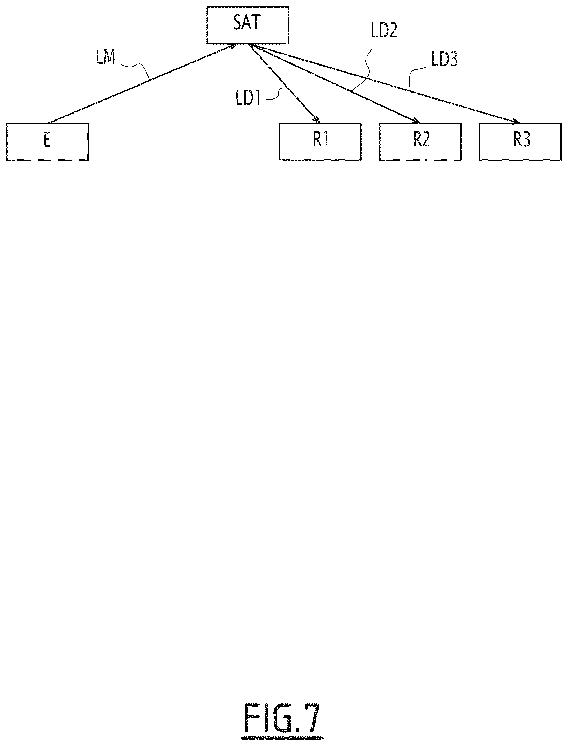

La [Fig.7] représente le procédé de transmission de signal par liaison RF par accès multiple non orthogonal NOMA pour transmission de signaux par satellites, dans un système de communication.

Le système de communication comprend un émetteur E transmettant par un lien montant LM des signaux à destination d'un satellite SAT, qui le diffuse et est reçu par, en l'espèce trois récepteurs, un premier récepteur R1, un deuxième récepteur R2 et un troisième récepteur R3, par trois liens descendants respectifs LD1, LD2 et LD3.

Sur l'exemple de la [Fig.7], le lien descendant L1 entre le satellite SAT et le premier récepteur R1 a un mauvais rapport signal sur bruit SNR, ou, en d'autres termes un rapport signal sur bruit SNR inférieur ou égal au premier seuil S1. Le lien descendant L2 entre le satellite SAT et le deuxième récepteur R2 a un bon rapport signal sur bruit SNR, ou, en d'autres termes un rapport signal sur bruit SNR supérieur au premier seuil S1 mais inférieur au deuxième seuil S2. Le lien descendant L3 entre le satellite SAT et le troisième récepteur R3 a un très bon rapport signal sur bruit SNR, ou, en d'autres termes un rapport signal sur bruit SNR supérieur au deuxième seuil S2.

Ainsi, les comparaisons par rapport aux premier seuil S1 et deuxième seuil S2 du rapport signal sur bruit permet d'affecter un récepteur à un ensemble défavorisé, favorisé ou très favorisé. En l'espèce le premier récepteur R1 est défavorisé, le deuxième récepteur R2 est favorisé, et le troisième récepteur R3 est très favorisé. L'utilisation des différentes clés de chiffrage permet ainsi, par exemple de mettre en place un canal caché, sur les récepteurs de l'ensemble très favorisé, en l'espèce le troisième récepteur R3.

## Revendications

1. Procédé de transmission de signal par liaison RF par accès multiple non orthogonal pour transmission de signaux par satellites, dans un système de communication comprenant un émetteur (E), un satellite (SAT), et au moins deux récepteurs hétérogènes (R1, R2, R3), formant au moins deux ensembles de récepteurs, nommés ensemble favorisé et ensemble défavorisé,
dans lequel lorsque le rapport signal sur bruit (SNR) d'un récepteur (R1, R2, R3) du système de communication est supérieur à un premier seuil (S1) on affecte le récepteur (R1, R2, R3) à l'ensemble favorisé, et sinon on l'affecte à l'ensemble défavorisé ; et
dans lequel, on superpose à l'émission du signal par l'émetteur, durant un même temps symbole, un symbole primaire (SP) et un symbole secondaire (SS), le symbole primaire (SP) étant destiné à l'ensemble favorisé et l'ensemble défavorisé, et le symbole secondaire (SS) étant à destination de l'ensemble favorisé et configuré pour être démodulable par l'ensemble favorisé, mais indémodulable par l'ensemble défavorisé,
le procédé étant **caractérisé en ce que** l'ensemble favorisé comprend des clés de chiffrages inconnues de l'ensemble défavorisé, permettant le déchiffrage du symbole secondaire (SS), et l'ensemble défavorisé comprend des clés de chiffrages connues de l'ensemble favorisé, permettant le déchiffrage du symbole primaire (SP).

2. Procédé selon la revendication 1, dans lequel on superpose, en outre, durant le même temps symbole, un symbole tertiaire (ST) aux symboles primaire (SP) et secondaire (SS), le symbole tertiaire (ST) étant à destination d'un ensemble très favorisé comprenant au moins un récepteur (R1, R2, R3) du système de communication et configuré pour être démodulable par l'ensemble très favorisé, mais indémodulable par les ensembles favorisé et défavorisé,
dans lequel, lorsque le rapport signal sur bruit (SNR) d'un récepteur (R1, R2, R3) du système de communication est supérieur à un deuxième seuil (S2) supérieur au premier seuil (S1), on affecte le récepteur (R1, R2, R3) à l'ensemble très favorisé.

3. Procédé selon la revendication 2, dans lequel, l'ensemble très favorisé comprend des clés de chiffrages inconnues des ensembles favorisé et défavorisé, permettant le déchiffrage du symbole tertiaire (ST), et comprenant les clés de chiffrage connues des ensembles favorisé et défavorisé.

4. Procédé selon l'une des revendications précédentes, dans lequel les ensembles sont modifiables dynamiquement, en fonction de mesures de rapport signal sur bruit (SNR) des récepteurs (R1, R2, R3).
